# EUROPEAN PATENT SPECIFICATION

(11) **EP 4 085 727 B1**
(45) Date of publication and mention of the grant of the patent: **26.11.2025**
(21) Application number: 20838580.7
(22) Date of filing: 30.12.2020
(51) Int. Cl.: H04W 76/14, H04W 8/00, H04W 88/04

(54) **RELAY DEVICE FOR A WIRELESS COMMUNICATION SYSTEM**
RELAISVORRICHTUNG FÜR EIN DRAHTLOSES KOMMUNIKATIONSSYSTEM
DISPOSITIF DE RELAIS POUR UN SYSTÈME DE COMMUNICATION SANS FIL

(30) Priority: 03.01.2020 EP 20150200
(43) Date of publication of application: 09.11.2022
(73) Proprietor: Koninklijke Philips N.V., 5656 AG Eindhoven (NL)
(72) Inventor: EBRAHIM REZAGAH, Roya, 10587 Berlin (DE); SRINIVASAN, Nithin, 10587 Berlin (DE); GÖKTEPE, Baris, 10587 Berlin (DE); FEHRENBACH, Thomas, 10587 Berlin (DE); HELLGE, Cornelius, 10587 Berlin (DE); WIRTH, Thomas, 10587 Berlin (DE); SCHIERL, Thomas, 10587 Berlin (DE)
(74) Representative: Philips Intellectual Property & Standards
(86) International application number: PCT/EP2020/088040
(87) International publication number: WO 2021/136810

(56) References cited:
- WO-A1-2016/182597
- WO-A1-2017/017874
- US-A1- 2018 048 986
- CATT: "Relay Initiation", vol. RAN WG2, no. Fukuoka, Japan; 20150525 - 20150529, 15 May 2015 (2015-05-15), XP050971401, Retrieved from the Internet <URL:http://www.3gpp.org/ftp/tsg_ran/WG2_RL2/TSGR2_90/Docs/> [retrieved on 20150515]

## Description

The present invention relates to the field of wireless communication systems or networks, more specifically to the field of relay devices used to provide functionality to support connectivity to a destination for one or more remote user equipments, UEs, of the wireless communication system or network.

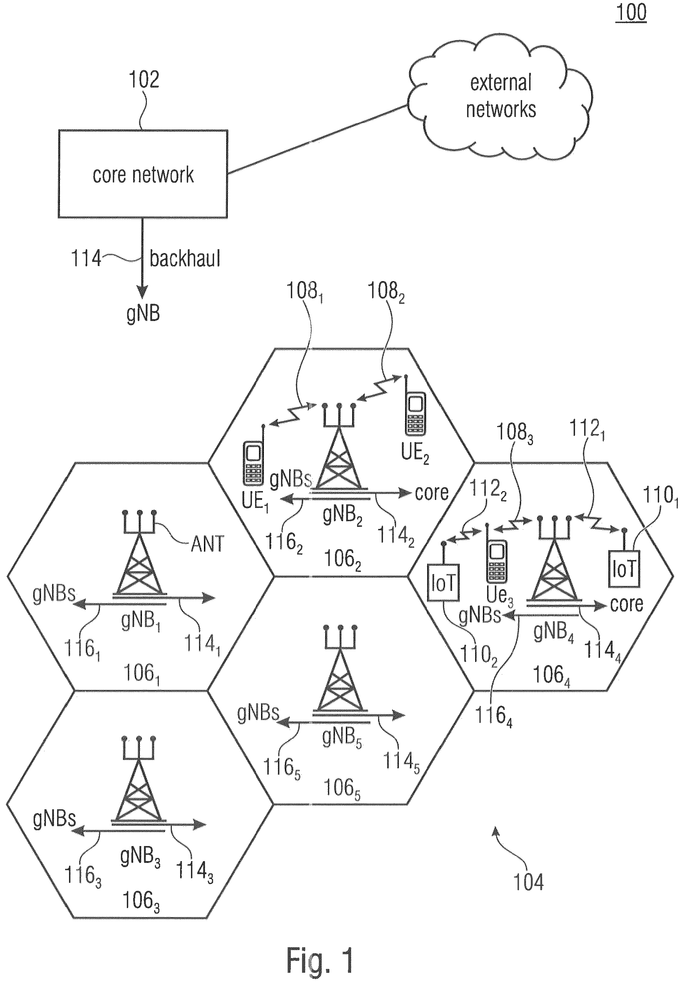

Fig. 1 is a schematic representation of an example of a terrestrial wireless network 100 including, as is shown in Fig. 1(a), a core network 102 and one or more radio access networks RAN₁, RAN₂, ... RAN_{N}. Fig. 1(b) is a schematic representation of an example of a radio access network RANₙ that may include one or more base stations gNB₁ to gNB₅, each serving a specific area surrounding the base station schematically represented by respective cells 106₁ to 106₅. The base stations are provided to serve users within a cell. The one or more base stations may serve users in licensed and/or unlicensed bands. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANₙ may include more or less such cells, and RANₙ may also include only one base station. Fig. 1(b) shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. This may be realized on licensed bands or on unlicensed bands. Further, Fig. 1(b) shows two loT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1(b) by the arrows pointing to "core". The core network 102 may be connected to one or more external networks. Further, some or all of the respective base station gNB₁ to gNB₅ may be connected, e.g. via the S1 or X2 interface or the XN interface in NR, with each other via respective backhaul links 116₁ to 116₅, which are schematically represented in Fig. 1(b) by the arrows pointing to "gNBs". A sidelink channel allows direct communication between UEs, also referred to as device-to-device (D2D) communication. The sidelink interface in 3GPP is named PC5.

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB) and one or more of a system information block (SIB), the physical downlink, uplink and sidelink control channels (PDCCH, PUCCH, PSSCH) carrying for example the downlink control information (DCI), the uplink control information (UCI) and the sidelink control information (SCI). Note, the sidelink interface may a support 2-stage SCI. This refers to a first control region containing some parts of the SCI, and optionally, a second control region, which contains a second part of control information.

For the uplink, the physical channels may further include the physical random access channel (PRACH or RACH) used by UEs for accessing the network once a UE synchronized and obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like nonorthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard, or the 5G or NR, New Radio, standard, or the NR-U, New Radio Unlicensed, standard.

The wireless network or communication system depicted in Fig. 1 may be a heterogeneous network having distinct overlaid networks, e.g., a network of macro cells with each macro cell including a macro base station, like base station gNB₁ to gNB₅, and a network of small cell base stations (not shown in Fig. 1), like femto or pico base stations.

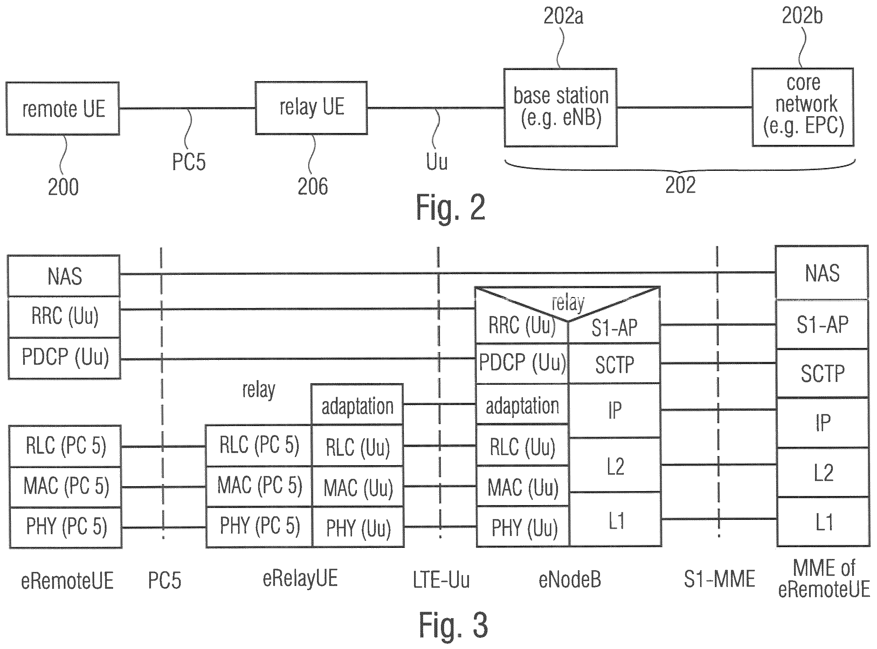

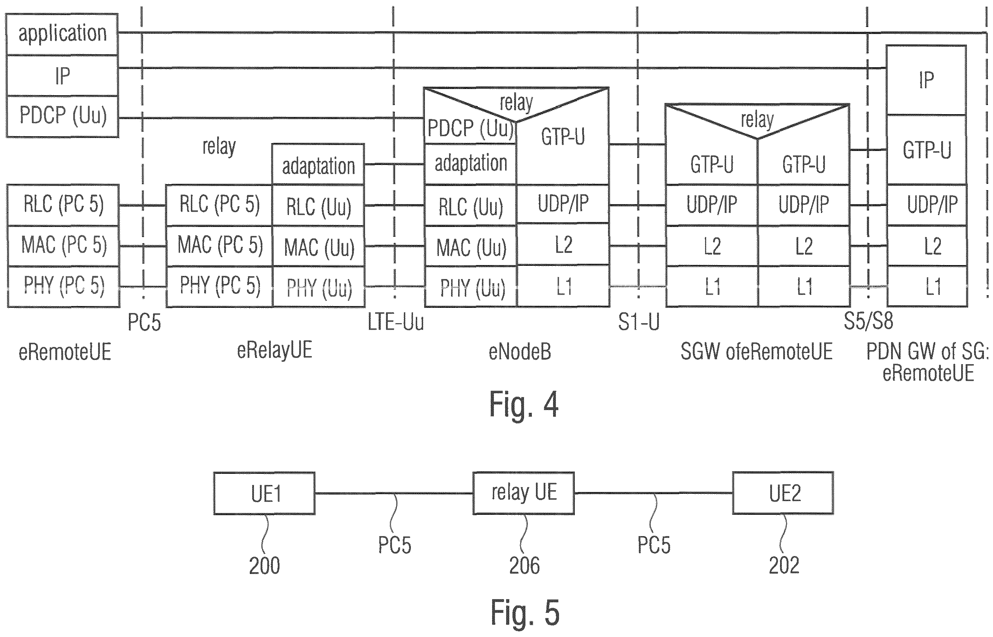

In a wireless communication system or network, like the one described above with reference to Fig. 1, relay devices or relay nodes may be employed to solve performance issues, like a reduced data rate, a weaker signal and higher interference as it may be encountered on the radio coverage edges of a cell of a base station. The relay node may extract data from a received signal, apply noise correction and retransmit a new signal on its own. Rather than only repeating the signal, the relay node also increases the signal quality. In the 3GPP specifications for 4G, a UE-to-Network relay has been specified. Fig. 2 illustrates a scenario where a relay UE operates as a UE-to-Network relay. The relay device or relay node mentioned above may be a user equipment, UE, and, in the following, is referred to a relay UE. Fig. 2 illustrates a UE 200 that is to connect to a destination 202, e.g., to an entity of the access network 202a, like a gNB, of to an entity of the core network 202a. The end-to-end communication between the UE 200, that is also referred to as the remote UE, and the destination uses a relay UE 206 that provides functionality to support connectivity to the destination in the core network 202 for the remote UE 200. The remote UE 200 and the relay UE may communicate using the PC5 interface, and the relay UE and the access network may communicate using the Uu interface. Fig. 3 illustrates the control plane protocol stack for the UE-to-Network relay 206, and Fig. 4 illustrates the user plane protocol stack of the UE-to-UE network relay 206, as specified in the 3GPP specification for 4G, 3GPP TR 23.733, describing Fig. 2, Fig. 3 and Fig. 4 in more detail.

In NR or 5G, in addition to the UE-to-Network relay, also a UE-to-UE relay is supported. In such a scenario, the destination 202 is another UE. Fig. 5 illustrates a scenario where the relay is a UE-to-UE relay 206. The remote UE 200 is to connect to the other UE 202, and the relay UE 206 provides functionality to support connectivity to the destination UE 208, for the remote UE 200. The remote UE 200 and the relay UE may communicate using the PC5 interface, and the relay UE and the other UE 202 may communicate using also the PC5 interface. The UE-to-UE relay 206 may be provided so as to implement proximity services, ProSe, as specified, for example, in 3GPP TR 23.752. The proximity services, ProSe, may support two discovery models, namely model A that uses a single discovery protocol message, the announcement message, and model B that uses two discovery protocol messages, the solicitation message and the response message.

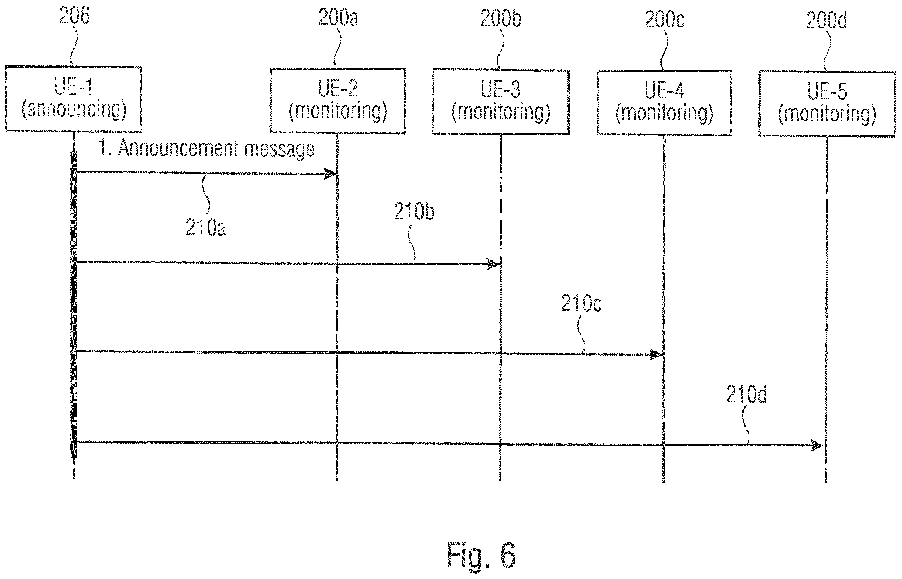

Fig. 6 illustrates an example for a public safely direct discovery using model A. Fig. 6 illustrates the relay UE 206 sending announcement messages 210a to 210d to one or more remote UEs 200a to 200d. For the UE-to-Network relay discovery the ProSe UE-to-Network relay 206 sends the UE-to-Network relay discovery announcement messages 210a to 210d having the following content:
- ProSe relay UE ID: the link layer identifier that is for direct communication and that is associated with a relay service code. UE-to-Network relay has a distinct ProSe relay UE ID for each relay service code. For support of multiple PDN, public data network, connections, the ProSe UE-to-Network relay 206 has assigned thereto a different ProSe relay UE ID for each PDN connection.
- Announcer information: information about the announcing user 206.
- Relay service code: this parameter identifies the connectivity service the ProSe UE-to-Network relay 206 provides to public safety applications. The relay service codes are configured in the ProSe UE-to-Network relay 206 for advertisement. Additionally, the relay service code also identifies authorized users the ProSe UE-to-Network relay 206 offers services to, and may select the related security policy or information, for example necessary for authentication and authorization between the remote UE and the ProSe UE-to-Network relay 206. For example a relay service code for relays for police members only is different than a relay service code for relays for firefighters only, even though potentially they provide a connectivity to the same APN, access point node, for example to support internet access.

For a UE-to-UE discovery, like a group memory discovery, the relay UE 206, also referred to as the announcing UE, sends, the group member discovery announcement messages 210a to 210d having the following content:
- ProSe UE ID: the link layer identifier that is used for the subsequent direct one-to-one and one-to-many communications.
- Announcer information: information about the announcing user 206.
- Discovery group ID: identifier of the discovery group that the UE 206 belongs to.

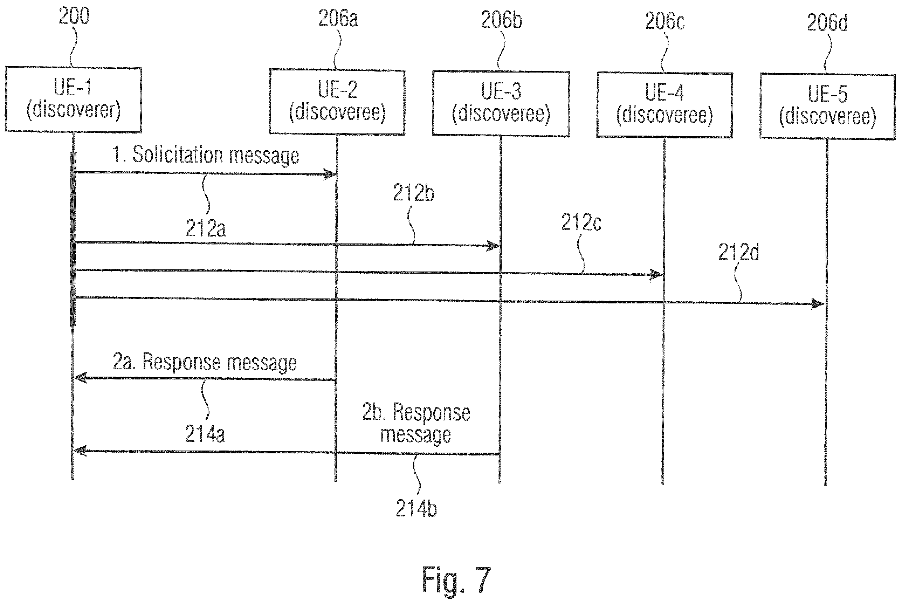

Fig. 7 illustrates a scenario for a public safety direct discovery using model B. In this model, the remote UE 200 sends one or more solicitation messages 212a to 212d to respective UEs 206a to 206d being capable to act as a relay UE so as to provide functionality to support connectivity of the remote UE 200 to a certain destination, e.g., another UE or the network, like an entity of the access network or an entity of the core network of the wireless communication system. Responsive to the solicitation messages 212a to 212d one or more of the UEs 206a to 206d may send a respond message, and Fig. 7 illustrates a scenario in which UE 206a sends a response message 214a, and UE 206b sends a response message 214b to the remote UE 200. In case the relay UE is to provide functionality to support connectivity to a network for the remote UE 200, for the UE-to-Network relay discovery, the remote UE sends a UE-to-Network relay discovery solicitation message 212 having the following content:
- ProSe relay UE ID: the link layer identifier that is for direct communication and that is associated with a relay service code. A UE-to-Network relay has a distinct ProSe relay UE ID for each relay service code. For the support of multiple PDN, public data network, connections, the ProSe UE-to-Network relay has assigned thereto a different ProSe relay UE ID for each PND connection.
- Announcer information: information about the announcing user 200.
- Relay service code: the parameter that identifies a connectivity service, the ProSe UE-to-Network relay provides two public safety applications. The relay service codes are configured in a ProSe UE-to-Network relay for advertisement. Additionally, the relay service code also identifies authorized users the ProSe UE-to-Network relay offers the services 2, and selects the relates the security policies or information, for example necessary for authentication and authorization between the remote UE 200 and the ProSe UE-to-Network relay 206. For example a relay service code for relays for police members only is different than a relay service code for relays for firefighters only, even though potentially they provide a connectivity to the same APN, access point node, for example to support internet access.

Responsive to the solicitation message those ProSe UE-to-Network relays 206a and 206b that match the values of the relay service code contained in the solicitation messages 212a to 212d respond to the remote UE 200 with the UE-to-Network relay discovery response message 214a, 214b which has the following content:
- Discovery information: information about the discoverer user 200.
- Relay service code: information about the connectivity that the discoverer UE 200 is interested in. The relay service codes are configured in the remote UEs 200 interested in related connectivity services.
- ProSe UE ID: the link layer identifier of the UE-to-Network relay 206a, 206b that is used for the direct communication and that is associated with a relay service code. The UE-to-Network relay 206a, 206b has a distinct ProSe relay UE ID for each relay service code, wherein the ProSe relay UE ID may be optional.

In case of a UE-to-UE discovery, like a group member discovery, the discoverer UE 200 sends a group member discovery solicitation message 212a to 212b having the following content:
- Discoverer information: information about the discoverer user 200,
- Discovery group ID: identifier of a discovery group that the targeted UEs 206a to 206d belong to.
- Target information: information about the targeted discoverees 206a, 206d, a single user or a group. The target information is provided by upper layers of the UE 200.

Then the discoverees or relay UEs 206a, 206b that match the values of the parameters contained in the solicitation message 212a, 212b based on the discovery group ID respond to the discoverer UE 200 with a group member discovery response message 214a, 214b having the following content:
- ProSe UE ID: the link layer identifier that is used for the subsequent direct one-to-one or one-to-many communication.
- Discovery information: information about the discoveree 206a, 206b,
- Discovery group ID: the identifier of the discovery group that the discoveree UE 206a, 206b belongs to.

After being connected to the ProSe UE-to-Network relay or the UE-to-UE relay, the remote UE 200 keeps performing measurements of the signal strengths of the discovery message sent by the ProSe UE-to-Network relay or the UE-to-UE relay, i.e., the relay discovery announcement messages in model A or the relay discovery response messages in model B for a potential relay selection. Dependent on the signal strength, the remote UE may decide to keep the current relay or, in case the signal strength is at or below a certain threshold, a relay reselection process may be initiated and a new relay UE may be selected using either model A or model B as explained above. For model B, to measure the PC5 link quality, the remote UE may send the discovery solicitation message periodically.

It is noted that the information in the above section is only for enhancing the understanding of the background of the invention and, therefore, it may contain information that does not form prior art that is already known to a person of ordinary skill in the art.

Tdoc R2-152321 discusses different options for the Relay UE initiations. One of the relay initiation method is per Relay UE itself. Another relay initiation method is per cell. Document CATT: "Relay Initiation", vol. RAN WG2, no. Fukuoka, Japan; 20150525 - 20150529 15 May 2015 (2015-05-15) discloses that the eNB only needs to configure the Relay initiation rules for Relay UE by broadcast and whether to initiate the relay function is decided by the Relay UE itself. Document US 2018/048986 A1 (ADACHI HIROYUKI [JP] ET AL) 15 February 2018 (2018-02-15) discloses a ProSe communication between an UE-NW relay and a eNB, in which the UE-NW relay transmits the own relay capability and the eNB replies by allowing the NW-Relay to reply by accepting or not executing relaying. Whenever accepting, the eNB configures the UE-NW accordingly.

Starting from the above, there may be a need for improvements or enhancements of relay nodes or relay devices in a wireless communication system or network.

In accordance with an aspect of this invention, this is solved by a user device as claimed in claim 1 or a method as claimed in claim 7, as well as by a network entity of claim 5, a system of claim 6 and a computer program product of claim 8.

Embodiments of the present invention are now described in further detail with reference to the accompanying drawings:
- Fig. 1: is a schematic representation of an example of a terrestrial wireless network;
- Fig. 2: illustrates a scenario where a relay UE operates as a UE-to-Network relay;
- Fig. 3: illustrates a control plane protocol stack for a UE-to-Network relay as specified in the 3GPP specification for 4G, 3GPP TR 23.733;
- Fig. 4: illustrates a user plane protocol stack of the UE-to-UE network relay as specified in the 3GPP specification for 4G, 3GPP TR 23.733;
- Fig. 5: illustrates a scenario where the relay is a UE-to-UE relay;
- Fig. 6: illustrates an example for a public safely direct discovery using ProSe discovery model A;
- Fig. 7: illustrates an example for a public safely direct discovery using ProSe discovery model B;
- Fig. 8: is a schematic representation of a wireless communication system including a transmitter, like a base station, one or more receivers, like user devices, UEs, and one or more relay UEs for implementing embodiments of the present invention;
- Fig. 9: illustrates an embodiment of the first aspect of the present invention allowing a UE to accept/reject its role as a relay UE;
- Fig. 10: illustrates an embodiment for a mobile originated signaling by which a UE signals a request to be released from its relay role;
- Fig. 11: illustrates an embodiment for a mobile terminated signaling for releasing a UE from its relay role or relay status;
- Fig. 12: illustrates an embodiment of the present invention in accordance with which a relay UE transmits assistance information;
- Fig. 13: illustrates an embodiment of the present invention in accordance with which a relay capable UE requests from a network to become an active relay;
- Fig. 14: illustrates an embodiment of a second aspect of the present invention for selecting among a plurality of relay nodes one relay node for connecting a remote UE to a destination;
- Fig. 15: illustrates embodiments for selecting UE-to-UE relays for an end-to-end communication between a remote UE and another UE, wherein Fig. 15(a) illustrates an embodiment in accordance with which the other UE performs the relay selection, and Fig. 15(b) illustrates an embodiment in accordance with which the remote UE selects the relay to be used;
- Fig. 16: illustrates embodiments for selecting a relay UE in case of an end-to-end communication between a remote UE and a network, wherein Fig. 16(a) illustrates an embodiment in accordance with which the network performs the relay selection, and Fig. 16(b) illustrates an embodiment in accordance with which the relay selection is performed by the remote UE;
- Fig. 17: illustrates an embodiment in accordance with which the communication between a remote UE and a destination uses two or more relays;
- Fig. 18: illustrates an embodiment employing N=2 relay layers for an end-to-end communication between a remote UE and a destination; and
- Fig. 19: illustrates an example of a computer system on which units or modules as well as the steps of the methods described in accordance with the inventive approach may execute.

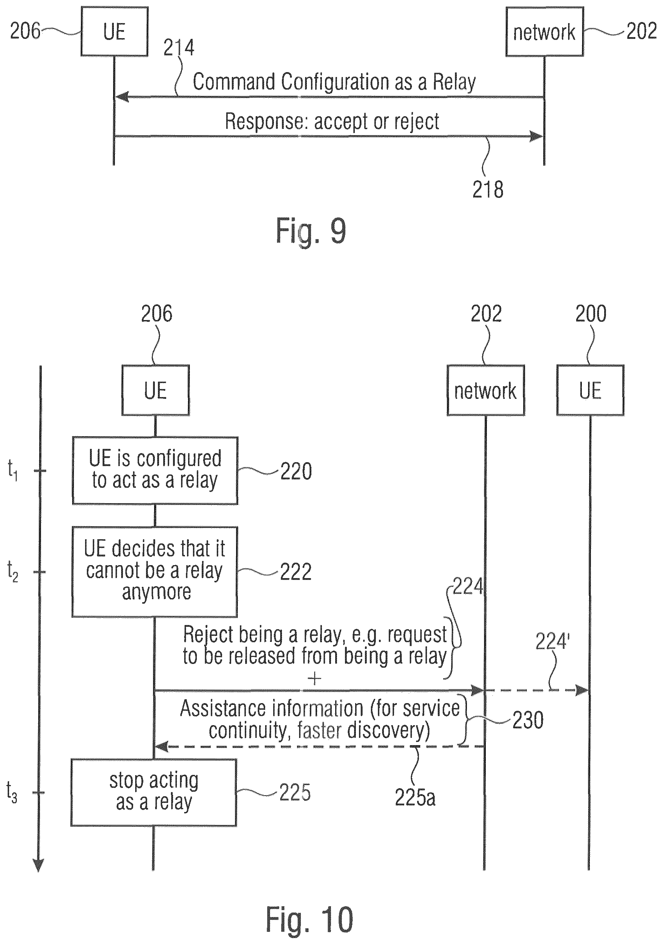

Embodiments of the present invention are now described in more detail with reference to the accompanying drawings, in which the same or similar elements have the same reference signs assigned. The claimed invention corresponds to fig. 9 and to the related text in the description. The remaining figures and the text of the description are intended to better explain the invention.

In wireless communication systems or networks, like the one described above with reference to Fig. 1, relay nodes or devices, like UE-to-Network relays or UE-to-UE relays may be used, and certain mechanisms for the communication via such relay nodes and mechanisms for the discovery of relay nodes are known. However, certain issues regarding relay nodes or relay devices are not addressed, for example specifics of the configuration of a certain user equipment, UE, to act as a relay, for example how a wireless communication system or network decides to configure a UE, whether being idle mode or in connected mode, as a relay, for example as a UE-to-UE relay or as a UE-to-Network relay, what aspects need to be included in a configuration message, how the UE handles this configuration and the like. Another non-addressed issue concerns a situation in which a plurality of relays are available that may connect the UE to another UE or to the network and, how the relays are to be selected, and which entity is to make the selection and the like.

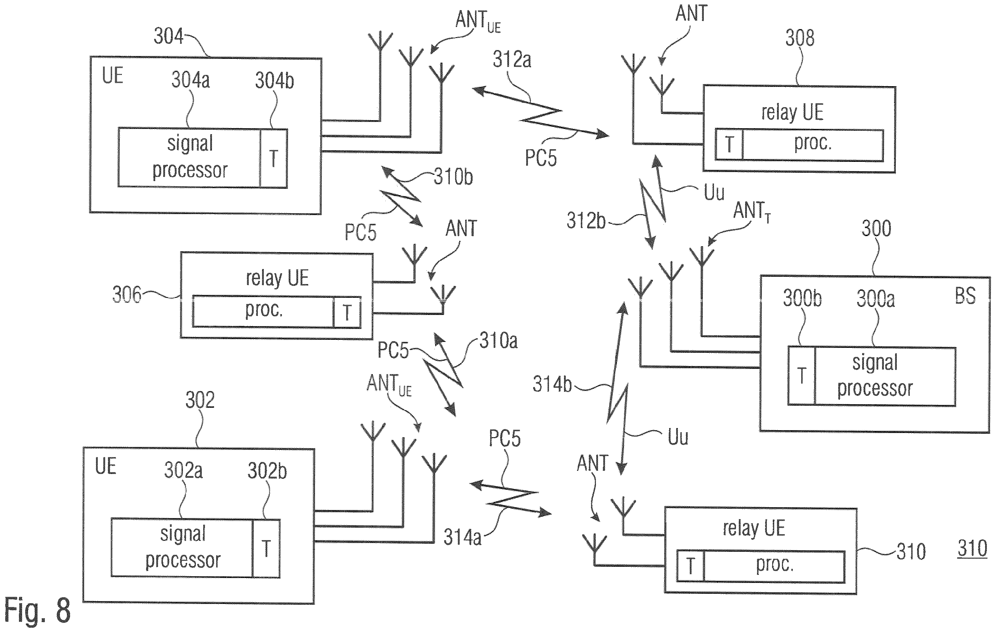

The present invention addresses the above issues and provides improvements and enhancements with regard to the handling of a user equipment as a relay device and with regard to the selection of one or more suitable relays among a plurality of available relays for connecting the remote UE to a destination. Embodiments of the present invention may be implemented in a wireless communication system as depicted in Fig. 1 including base stations and users, like mobile terminals or loT devices. Fig. 8 is a schematic representation of a wireless communication system including a transmitter 300, like a base station or gNB, one or more receivers 302, 304, like user devices, UEs, and one or mor relay nodes 306, 308 and 310, like relay UEs, for implementing embodiments of the present invention.

The transmitter 300 and the receivers 302, 304 may communicate via the respective relay UEs 306, 308, 310 using respective wireless communication links or channels 310a, 310b, 312a, 312b and 314a, 314b, like respective radio links. The transmitter 300 may include one or more antennas ANT_{T} or an antenna array having a plurality of antenna elements, a signal processor 300a and a transceiver 300b, coupled with each other. The receivers 302, 304 include one or more antennas ANT_{UE} or an antenna array having a plurality of antennas, a signal processor 302a, 304a, and a transceiver 302b, 304b coupled with each other. Each of the relay UEs 306, 308, 310 includes one or more antennas ANT or an antenna array having a plurality of antennas, a signal processor, and a transceiver T coupled with each other. The base station 300 and the UE 302 may communicate via the relay UE 310 using the wireless communication link 314b, like a radio link using the Uu interface, between the base station 300 and the relay UE 310, and using the wireless communication link 314a, like a radio link using the PC5/sidelink (SL) interface, between the UE 302 and the relay UE 310. Likewise, the base station 300 and the UE 304 may communicate via the relay UE 308 using the wireless communication link 312b, like a radio link using the Uu interface, between the base station 300 and the relay UE 308, and using the wireless communication link 312a, like a radio link using the PC5/sidelink (SL) interface, between the UE 304 and the relay UE 308. The UEs 302, 304 may communicate with each other via the relay UE 306 using the wireless communication link 310a, like a radio link using the PC5/sidelink (SL) interface, between the UE 302 and the relay UE 306, and using the wireless communication link 310b, like a radio link using the PC5/sidelink (SL) interface, between the UE 304 and the relay UE 310. Any one of the system or network, the one or more UEs 302, 304, the one or more relay UEs 306-310 and/or the base station 300, as illustrated in Fig. 8, may operate in accordance with the inventive teachings described herein.

In the present description, when referring to the network, reference is made for example to the core network of the wireless communication system or to an access network of the wireless communication system. Within the core network or the access network, the destination may be one or more of the following:
- a base station,
- a core network entity or a core network function, e.g. AMF, SMF, etc.,
- a UE.

In accordance with embodiments, an entity of the wireless communication system or network may include one or more of the following: a UE, or a mobile terminal, or a stationary terminal, or a cellular loT-UE, or a vehicular UE, or a vehicular group leader (GL) UE, or an loT, or a narrowband loT, NB-loT, device, or a WiFi non Access Point STAtion, non-AP STA, e.g., 802.11ax or 802.11be, or a ground based vehicle, or an aerial vehicle, or a drone, or a moving base station, or a road side unit, or a building, or any other item or device provided with network connectivity enabling the item/device to communicate using the wireless communication network, e.g., a sensor or actuator, or a macro cell base station, or a small cell base station, or a central unit of a base station, or a distributed unit of a base station, or a relay, or a remote radio head, or an AMF, or an SMF, or a core network entity, or mobile edge computing entity, or a network slice as in the NR or 5G core context, or any transmission/reception point, TRP, enabling an item or a device to communicate using the wireless communication network, the item or device being provided with network connectivity to communicate using the wireless communication network.

### First Aspect

In accordance with a first aspect of the present invention, certain issues when a UE is configured as a relay UE are addressed. For example, a UE to be configured as a relay UE or already configured as a relay UE may be allowed to reject its role as a relay UE, either when being configured to be a relay UE or, once it has been configured as the relay, at some time after this configuration.

Fig. 9 illustrates an embodiment in accordance with the first aspect in which a UE to be configured as a relay may accept or reject such a configuration, i.e., the UE may accept or reject its role to operate as a relay UE providing functionality to support connectivity to a destination for one or more remote UEs in the wireless communication system. The destination may be another UE or, as claimed, an entity of the network, like the access network or the core network of the wireless communication system. The UE 206 receives from the network, for example from a core network entity of the wireless communication system of Fig. 1, a command configuration message 214 causing the UE 206 to act as a relay UE so as to provide functionality to support connectivity to a destination for one or more remote UEs of the wireless communication system. Responsive to the message 214, the UE 206 decides to accept or to reject its role as a relay UE and to send a response 218 to the network 202 including either an accept message or a reject message. The embodiment described with reference to Fig. 9 is applicable to any type of relay 206, for example, the UE 206 may be a UE-to-UE relay, a UE-to-Network relay or any enhanced relay. The network 202, as described, may select the UE 206 to be configured as a relay and may send the configuration 214 to the selected UE 206. The network 202 may use an access stratum, AS, signaling, like RRC signaling, or a non-access stratum, NAS, signaling for transmitting the configuration 214 to the UE 206. In case of a NAS signaling, the information may be piggybacked over RRC signaling, for example as a *dedicatedNASinfo.* On the basis of the information included in the configuration 214, the UE 206 is configured to act as a relay.

The UE 206 may signal to the network 202 that it accepts or rejects its role as a relay UE.

For example, the decision may be made by the UE 206 dependent on specific reasons or circumstances, like the environment in which the UE 206 is located, like the location of the UE, or a certain status of the UE. For example, the UE 206 may reject the configuration command in case it is moving towards out-of-coverage. Another reason for rejecting the configuration may be a certain status of the UE, for example, that the UE has a low battery status so that the relay functionality may not be reliably provided. Yet another reason may be that the UE has limited processing power, for example a temporal reduction in processing power because other applications running on the UE 206 occupy its processing power. Another reason may be related to a UE capability. For example, the UE may use hardware features required for a certain functionality or operation a different feature, like for an interference suppression or receive beamforming, so that these features or Degrees of Freedom, DoFs, may not be used for the relay link. Yet another reason for rejecting the role as the relay UE may be a certain environmental situation, for example, that there is a high occupation of radio resources to be use for the connection from the relay UE to the remote UE, which may be due to a high number of relays being located in the vicinity of the UE 206. For example, the radio resources may include UL, DL, and flexible (F) slots. In accordance with another example the UE may reject its relay role in case a pre-defined Key Performance Indicator, KPI, measured at the given UE is below or above a pre-defined threshold. The KPI may include one or more of the following: the Signal to Noise Ratio, SNR, the Signal to Interference and Noise Ratio, SINR, the Radio Signal Strength Indicator, RSSI, the Reference Signal Received Power, RSRP, the Channel Quality Indicator, CQI, throughput, the Bit Error Rate, BER, and/or the Packet Error Rate, PER. For example, the KPI may indicate that the link between the proposed relay UE and its destination, e.g., potential target UEs, is just not good enough or does not allow a certain throughput, so that is doesn't make sense for the UE to act as relay UE.

In accordance with embodiments, the UE 206 may include into the response 218, in case of a reject message also the reason why the configuration command was rejected by the UE 206.

In accordance with further embodiments of the first aspect, a UE is considered that is already configured as a relay. In accordance with embodiments, the relay UE may request to be released as a relay at a later time. In other words, a UE that has been configured to act as a relay UE at a certain time, may request at a later time to be released, i.e., to no longer act as a relay UE. In accordance with embodiments, the request to be released as a relay may include a mobile originated signaling and/or a mobile terminated signaling. In accordance with embodiments, in case of a mobile originated signaling, the UE initiates and sends a rejection or a request of rejection, i.e., a request to be released from the relay node, to the network.

Fig. 10 illustrates an embodiment for a mobile originated signaling by which a UE signals a request to be released from its relay role. Fig. 10 illustrates the relay UE 206 and the network 202. It is assumed, as indicated at 220, that the UE 206 is configured to act as a relay. For example, the UE 206 may have received a command configuration 214 as described above with reference to Fig. 9 and accepted at a time t₁ to act as a relay UE. Also other mechanisms for configuring the UE 206 to act as a relay UE may be employed at the time t₁.

At a later time, like at time t₂ indicated in Fig. 10, the UE 206 may decide that it cannot be a relay anymore. For example, for one or more of the reasons mentioned above with reference to Fig. 9, the UE 206 recognizes that it can no longer provide the relay services. For example, the certain cause or reason may be one or more of:
- a location of the UE, e.g. the UE moving towards out-of-coverage,
- a status of the UE, e.g. a low battery status,
- a limited processing power, e.g. one or more other applications occupy the UE's processing power,
- a high occupation of radio resources, e.g. due to many relays in the vicinity of the UE.
- a UE capability, e.g. the UE uses required hardware features for a different feature,
- a pre-defined KPI measured at the given UE, e.g. SNR, SINR, RSSI, RSRP, RSRQ, CQI, throughput, BER, PER, which is below or above a pre-defined threshold.

Therefore, following the decision at 222, the UE sends the rejection message 224 to the network 202 indicating the request that the UE 206 is to be released from being a relay. Responsive to the message 224, the UE 206 stops operating as a relay UE at time t3, as is indicated in Fig. 10 at 225. The network 202 considers the UE 206 to be no longer a relay UE. In accordance with embodiments, the UE 206 may stop acting as a relay UE responsive to a message 225a, like a release message, transmitted by the network 202 responsive to the release request 224. In accordance with other embodiments, no confirmation or the like may be signaled from the network 202 to the UE 206, and the UE 206 stops acting as the relay after sending the release request 224. In accordance with embodiments, the UE 206 may also inform the one or more remote UEs 200 for which it performs relay information that it no longer operates as relay UE, as indicated at 224' so as to allow the one or more remote UEs 200, for example, to initiate a reselection process for selecting a new relay UE for providing connectivity to the destination, for example, to the network 202 or to another UE. In accordance with other embodiments, the one or more remote UEs 200 may be informed by the network that UE 206 no longer operates as relay UE.

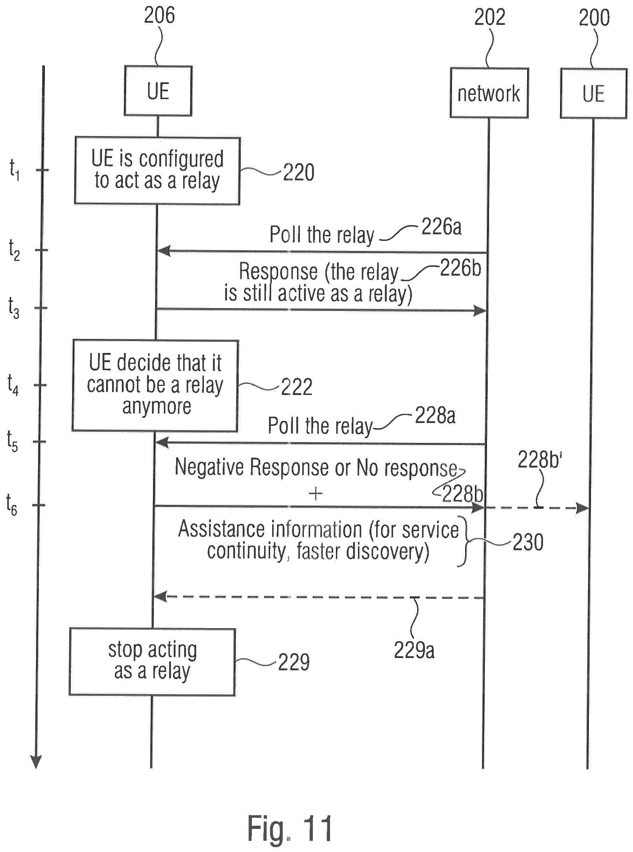

Fig. 11 illustrates an embodiment for a mobile terminated signaling for releasing a UE from its relay role or relay status. As described with reference to Fig. 10, also in Fig. 11 the relay UE 206 is assumed to be configured to act as the relay at a time t₁, for example, in a way as described above with reference to Fig. 9 or in any other way. The network 202 may poll the relay status. For example, at certain intervals or with a certain periodicity, the UE 200 may issue a polling message 226a to the relay UE 206 which responds with a response message 226b indicating, e.g., that the relay is still active. In the embodiment of Fig. 11, after the UE 206 is configured to act as the relay UE, at times t₂ and t₃ the polling message 226a and the response message 226b are transmitted. These messages may be transmitted more often as indicated in Fig. 11. It is assumed that at a time t₄ the UE decides, for example for the certain reasons or causes described above, that it can no longer be a relay UE, as is indicated at 222. Following time t₄, when receiving the next polling message 228a from the message 200, the UE 206 replies, at a time t₆ with a negative response message or with no response at all, as indicated at 228b. In case of a negative response message indicating that the UE 206 requests to be released from the relay role or in case no response from the UE 206 is sent in response to the polling message 228a, in the same way as described above with reference to Fig. 10, the network 202 is aware that UE 206 is no longer a relay UE. The UE 206 stops acting as a relay UE, as is indicated in Fig. 11 at 229. In accordance with embodiments, the UE 206 may stop acting as a relay UE responsive to a message 229a, like a release message, transmitted by the network 202 responsive to the negative response 224. In accordance with other embodiments, no confirmation or the like may be signaled from the network 202 to the UE 206, and the UE 206 stops acting as the relay after sending the response. No further exchange of information may be required needed.

In accordance with embodiments, the relay 206 may inform the remote UEs 200 it was supporting that it no longer acts as a relay UE for the remote UEs 200 as indicated at 228b' so as to allow the remote UEs 200 to initiate a reselection process for finding a new relay UE to provide for the connectivity to the destination, like the network or another UE. In accordance with other embodiments, the one or more remote UEs 200 may be informed by the network that UE 206 no longer operates as relay UE.

Thus, in accordance with the embodiment of Fig. 11, the network 202 checks regularly or periodically whether the relay 206 is available or not, and the relay UE may respond with a reject message or a request to be released from the relay role. An advantage of the process of Fig. 11 is that in case the relay UE 206 lost connection to the network 202, this causes the relay not to respond to the polling message 228a so that the network realizes that the relay UE 206 is no longer available or lost. In accordance with embodiments, the UE 206 may recognize that there is no connection to the network, e.g., because no polling message are received. In such a case, the UE 206 may stop acting as a relay, e.g., responsive to not receiving a polling message within a certain time window since the last polling message.

In accordance with further embodiments, the reject message 224 in Fig. 10 or the response message 228b in Fig. 11 may include the certain reason or cause described above, because of which the UE 206 decided to be no longer a relay, and/or additional information 230. The certain cause and/or the additional information 230 may be provided to the network 202 and/or to the remote UEs the relay UE 206 was supporting before it decided to be no longer a relay UE. The certain cause and/or the additional information is provided to the network or network entity which configures the relay UE. Depending on the scenario, the network may or may not be the destination of the communication that happens after the configuration. However, the network still manages and controls the resources. Therefore, it is useful if the relay UE sends the assistance information to the network. In accordance with further embodiments, the certain cause and/or the additional information may be provided also to the destination of the communication.

The additional information 230 may be referred to as assistance information. The relay UE 206 may transmit the assistance information 230 to the network 202 and/or to the remote UE 200. The certain cause and/or assistance information 230 may support the network 202 and/or the remote UE 200 and/or the destination in adapting to the requirements for service continuity, faster discovery of another suitable relay UE and/or load balancing. For example, the relay UE 206, when requesting to be released from the UE role, may provide to the network 202 a list of remote UEs 200 it was serving, for example together with the corresponding quality of service QoS and/or scheduling requirements. In accordance with embodiments, the assistance information 230 may include one or more of the following:
- QoS profiles of the one or more remote UEs 200 that the relay UE 206 supported,
- the QoS profile of the relay UE 206,
- the one or more relay UE IDs supported for each remote UE connection,
- the one or more UE IDs or a groupcast ID supported,
- the services and/or service IDs with associated priorities supported,
- a list of PLMN IDs, public land mobile network identifiers, that the relay 206 was supporting,
- a list of IDs of potential new relay UE(s), e.g. a sorted list if larger than 1.

In accordance with further embodiments of the present invention, a relay UE may transmit assistance information to the destination and/or to the network and/or the one or more remote UEs at certain, preconfigured occasions after being configured as a relay UE. For example, the assistance information may be provided with a certain periodicity, or responsive to a polling message from the network, or responsive to a certain situation the relay UE experiences, or responsive to a certain event or cause.

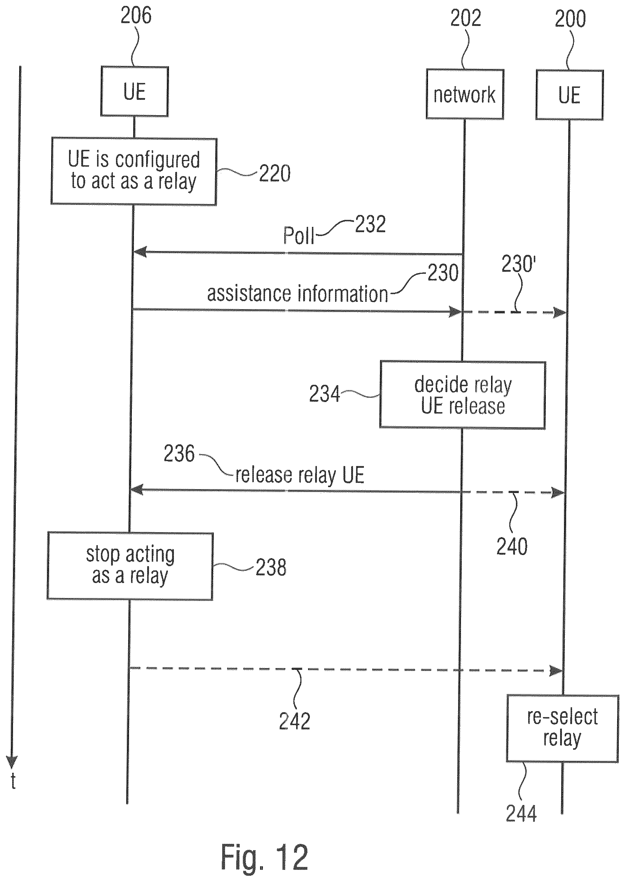

Fig. 12 illustrates an embodiment of the present invention in accordance with which the relay UE transmits assistance information, like the information described above with reference to Fig. 11, for supporting the destination/network/remote UE in adapting to requirements for service continuity and/or faster discovery of another relay and/or load balancing. Fig. 12 illustrates the relay UE 206 that is configured to act as a relay UE at a certain time t₁, as is indicated at 220. At a certain time after being configured as a relay UE, for example at a time t₂, the UE 206 may transmit the assistance information 230 to the network 202. The assistance information may be the information described above with reference to Fig. 11 in detail. In accordance with embodiments, the assistance information 230 may be transmitted to the network 202 as indicated at 230 or to the one or more remote UEs 200 as indicated at 230' or both to the network 202 and the one or more remote UEs 200. In accordance with embodiments, the assistance information 230 may also be transmitted to a destination of the communication. The assistance information 230 may be transmitted by the relay UE 206 at regular intervals or at preconfigured times.

In accordance with other embodiments, the assistance information 230 may be transmitted by the UE 206 responsive to a certain situation or event experienced by the relay UE 206. For example, the assistance information 230 may be transmitted dependent on a certain location of the relay UE, like the UE moving towards an out-of-coverage with the network 202, or in case the UE recognizes that it has a certain status, like a low battery status, or in case of a limited processing power, for example in case other applications running on the relay UE occupy its processing power, Another reason for transmitting the assistance information 230 may be related to a UE capability. For example, the UE may use hardware features required for a certain functionality or operation a different feature, like for an interference suppression or receive beamforming, so that these features or Degrees of Freedom, DoFs, may not be used for the relay link. The UE may transmit the assistance information 230 in case of a high occupation of radio resources, for example due to a high number of relay UEs in the vicinity of the UE 206. For example, the radio resources may include UL, DL, and flexible (F) slots. In accordance with another example the UE transmit the assistance information 230 in case a pre-defined Key Performance Indicator, KPI, measured at the given UE is below or above a pre-defined threshold. The KPI may include one or more of the following: the Signal to Noise Ratio, SNR, the Signal to Interference and Noise Ratio, SINR, the Radio Signal Strength Indicator, RSSI, the Reference Signal Received Power, RSRP, the Channel Quality Indicator, CQI, throughput, the Bit Error Rate, BER, and/or the Packet Error Rate, PER. For example, the KPI may indicate that the link between the proposed relay UE and its destination, e.g., potential target UEs, is just not good enough or does not allow a certain throughput, so that is doesn't make sense for the UE to act as relay UE. Responsive to such events or causes, the UE may decide to transmit the assistance information 13.

In accordance with yet other embodiments, the assistance information 230 may be transmitted by the UE 206 responsive to a polling message 232 transmitted from the network 202 to the relay UE 206.

In accordance with embodiments, the assistance information 230, 230' received at the network 202 and/or the one or more remote UEs 200 and/or the destination may be stored at these entities to be used for further processes.

In accordance with further embodiments, the assistance information 230 may be used at the network 202 to decide, as is indicated at 234 whether the relay UE 206 is to maintain its role as a relay UE or whether the UE 206 is to be released from its role as a relay UE. In such embodiments, the assistance information 230 may also include the above-mentioned reasons or causes for sending the information 230 and dependent on this information the network 202 decides at 234 to release the UE 206 from its relay role or to maintain the UE's relay role. In case the network 202 decides to release the UE 206 from its relay role, a release message 236 is transmitted to the UE 206 responsive to which the UE 206, at 238, stops acting as a relay UE. The network 202 may inform the one or more remote UEs 200 that the UE 206 is released from its relay role, as indicated at 240 as to allow the remote UEs 200 to initiate a reselection process for finding a new relay node. In accordance with other embodiments, the signaling about the UE 206 being released from its relay node may be by the UE 206 at 242 informing the one or more remote UEs it supported that it no longer acts as a relay so as to allow the remote UEs 200 to initiate a reselection process as indicated schematically at 244.

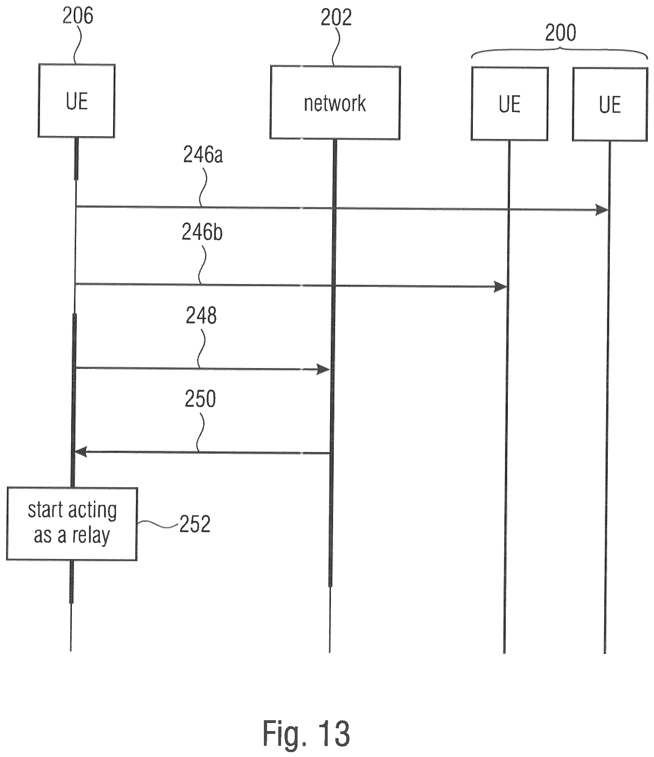

In accordance with other embodiments of the present invention, a UE that is capable to act as a relay but that, so far, is not employed by the network as a relay UE may signal, responsive to certain triggers or events a request to the network requesting to become a relay UE. For example, the UE may listen to connection requests from other UEs, for example through ProSe, attempting to connect to a relay UE and responsive to such connection requests, the UE may signal to the network, in case it has a connection to the network, that it desires to become a relay UE for the network. For example, responsive to listening to connection requests from remote UEs and responsive to determining that no other relay is responding, a currently non-active relay UE may send the request to the network requesting to become an active relay UE. Fig. 13 illustrates an embodiment of the present invention in accordance with which a relay capable UE requests from a network to become an active relay. The UE 206 is assumed to be capable to provide relay functionality, however, initially the UE 206 is not actively operating as a relay UE within the wireless communication system. As is indicated at 246a and 246b the UE 206 may listen to connection requests from one or more remote UEs 200, for example through the ProSe server, and responsive to determining that requests for a relay exist, the UE 206 may send a request message at 248 to the network 202 requesting the network to become an active relay UE. For example, the message 248 may be transmitted by the UE 206 in case it is determined that there is no relay response responsive to connection requests for a relay from one or more remote UEs 200. Responsive to the request 248, the network 202 may transmit a response or activation message 250 to the UE 206 responsive to which the UE activates its relay functionality, as indicated at 252.

In accordance with embodiments, the relay UE 206 may be a relay UE that is configured by the network to operate as a relay UE but rejected its relay role, as described with reference to Fig. 9, or it may be a relay UE 206 that already operated as a relay but the relay role was released as described above with reference to Fig. 10 to 12. Such a relay UE may request to become an active relay UE again in a way as described above with reference to Fig. 13.

In accordance with yet other embodiments, in addition to listening to the request connections from the remote UEs 200 or instead of listening to such connection requests, the UE 206 in Fig. 13 may request to become a relay UE in case the conditions, which caused the relay UE to reject its relay role initially (see Fig. 9) or which caused the release of the relay UE from its relay role (see Fig. 10 to Fig. 12), no longer apply. For example the location of the UE allows for a reliable relay function, or the UE is no longer moving towards an out-of-coverage situation, or a state of the UE changed, for example the battery status by connecting the relay UE to a charger, or sufficient processing power is now available, for example because one or more of applications running on the UE 206 no longer occupy its processing power, or the occupation of sidelink resources is reduced, for example because the number of relays in the vicinity of the UE decreased. In accordance with other embodiments, the UE 206 may request to become a relay UE dependent on its position in the network, e.g., based on a GPS position or based on one or more measured KPIs such as the received signal strength, e.g., RSSI or SNR, and/or dependent on an interference condition of the UE, e.g., in case the interference drops below a certain threshold so that the UE may establish a feeder link to the BS with a certain quality, e.g., measured using SINR or a similar KPI.

In accordance with further embodiments, when configuring a relay UE, like a relay UE described above with reference to Fig. 9 to 13, the relay UE may be provided with further information that enables the relay UE to perform admission control, i.e., to enable to UE to decide to perform as a relay or not for particular communications.

For example, LTE ProSe supports admission control for relays based on the ProSe Service Codes, which are indicating a service type that is to be relayed via the relay. This mainly targets public safety, however, supporting admission control only on the basis of the service type is not enough to support also traffic intensive service types as they may be encountered in NR D2D applications. For example, a PLMN configuring a relay may not want to allow UEs of another PLMN using its relay and exploiting its spectrum. In another example, the network may allow a relay to support only certain QoS types, e.g. because of limited capabilities of the relay or an insufficient link between the relay and the network. Furthermore, there may be internal restrictions at the relay, such as computational power. Therefore, in accordance with embodiments of the present invention, the further information is provided to the relay UE so it may decide to perform as a relay or not for a particular communication. In accordance with embodiments, the network may allow a relay to support only certain QoS types, for example because of limited capabilities of the relay or an insufficient link between the relay and the network, or in case of internal restrictions at the relay, such as limited computational power. The further information may include one or more of the following:
- one or more supported PLMNs,
- one or more supported QoS levels,
- one or more rules on maximum load and/or available resources,
- one or more supported traffic types.

In accordance with embodiments, the further information may be signaled explicitly, for example as part of the configuration command, or it may be signaled implicitly, for example by mapping certain ProSe service codes to certain parameter values.

### Second Aspect

In accordance with embodiments of a second aspect of the present invention, different approaches for selecting one or more relay nodes or relay devices among a plurality of available relay devices are provided. While the use of relay devices, especially with regard to making a relay node available by announcing its presence, is well described in the art, so far there is no mechanism described that allows determining from a plurality of available relays the one or more relays to be used for a remote UE so as to provide connectivity to a destination, like another UE or the network.

When selecting one or more relay devices to provide the connectivity to the destination, either end of the communication may see a different path, i.e., the remote UE may see a path via the one or more relay devices to the destination that may be different from a path seen by the destination towards the remote UE. Therefore, in accordance with embodiments of the second aspect it is suggested to provide information about all links or hops of each path to one or both ends of the communication. In other words, information about the respective links between the remote UE and a relay node, between a relay node and the destination and between potential relay nodes in between is provided to the remote UE and/or the destination. Either end of the communication may use the information to select one or more relay UEs for the end-to-end communication between the remote UE and the destination. In case of a UE-to-UE relay, both ends are UEs, and in case of a UE-to-network relay, one end is a UE, and the other end is the network, for example, a base station or gNB of the access network of the communication system.

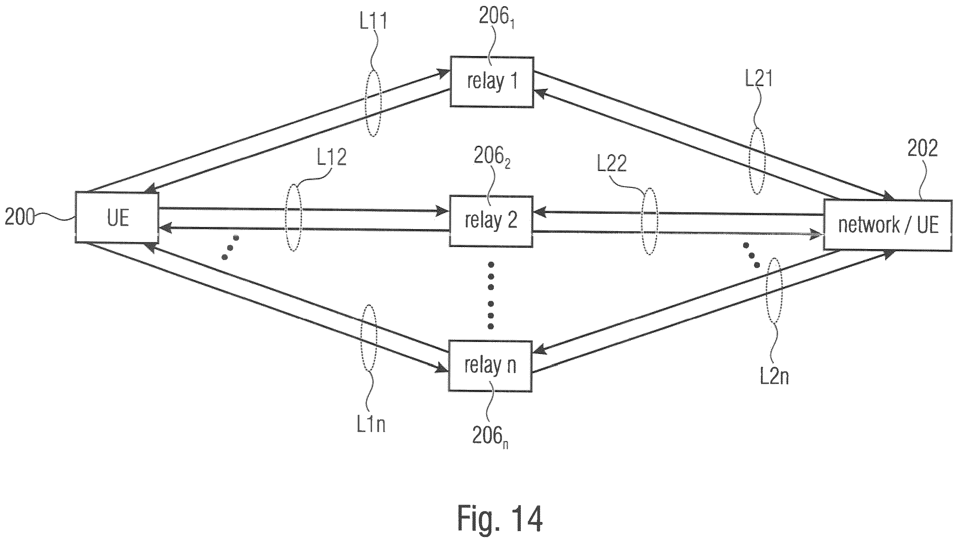

Fig. 14 illustrates an embodiment of the second aspect of the present invention for selecting among a plurality of relay nodes one relay node for connecting a remote UE to a destination. Fig. 14 illustrates the remote UE 200 and the destination 202 which, as indicated above, may be the network, like the base station of an access network or another entity of the core network of the wireless communication system core, or which may be another UE. A plurality of relay UEs 206₁ to 206ₙ is available for providing the end-to-end communication between the UE 200 and the network/UE 202. The relay UEs 206₁ to 206ₙ are capable of providing the connectivity for the UE 200 to the destination 202. In other words, the relay UEs 206₁ to 206ₙ may connect to the UE 200 and also to the UE/network 202. Fig. 14 illustrates the respective links L11 to L1n between the UE 200 and the relay UEs 206₁ to 206ₙ, as well as the respective links L21 to L2n the destination 202 and the relay UEs 206₁ to 206ₙ. The relay UEs 206₁ to 206ₙ are UE-to-network relay in case the destination 202 is the network, and the relay UEs 206₁ are UE-to-UE relays in case the destination 202 is another UE.

The UE 200 and the respective relay UEs 206₁ to 206ₙ may establish a connection with each other, and the link qualities on the respective links L11 to L1n are known at the UE 200 and/or at the relay UEs 206₁ to 206ₙ. The destination 202 and the respective relay UEs 206₁ to 206ₙ may establish a connection with each other, and the link qualities on the respective links link L21 to L2n are known at the destination 202 and/or at the relay UEs 206₁ to 206ₙ. For selecting the relay from the plurality of relay UEs 206₁ to 206ₙ to be used for the end-to-end communication between the remote UE 200 and the destination 202, those link qualities not available at the UE 200 or at the destination 202 are provided to the remote UE 200 and/or the destination 202. Thus, at one or both ends of the communication path between the remote UE 200 and the destination 202 the information about the quality the potential links is available, which allows the remote UE 200 and/or the destination 202 to select the UE relay to be used for the end-to-end communication.

In accordance with embodiments, the link quality of the respective links L11 to L1n and L21 to L2n may be indicated by the respective relay UEs 206₁ to 206₂ using channel indicator information. The channel indicator information may be based on one or more of the following parameters:
- the link quality between the remote UE and the relay,
- the link quality between the destination or target and the relay,
- a current load on the link,
- a quality of service, QoS, as requested by the remote UE and/or the destination,
- the available resources to be used for the respective link.

On the basis of this information, either the remote UE 200 or the destination 202 may pick or select a relay 206 to start the communication.

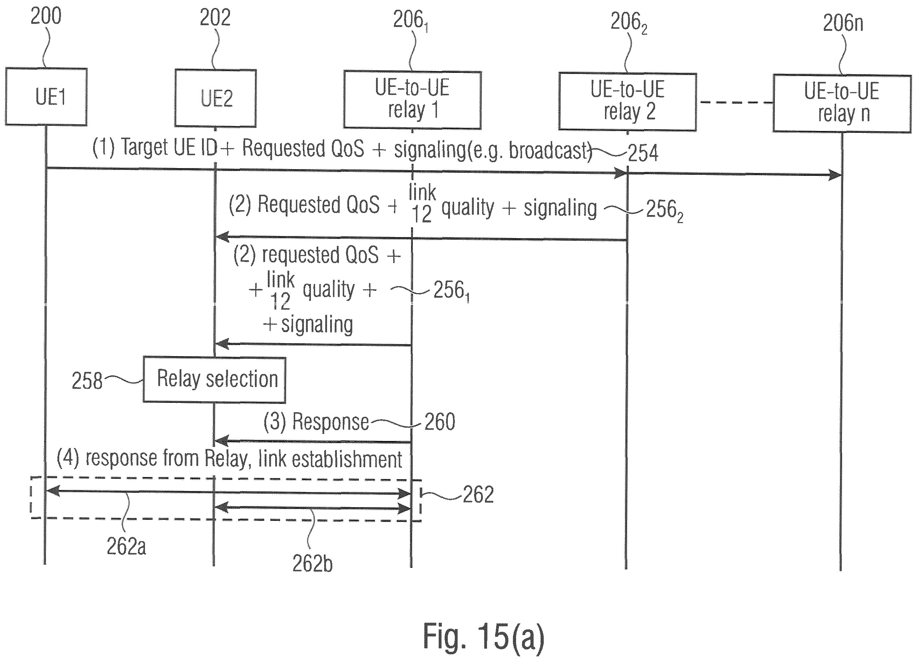

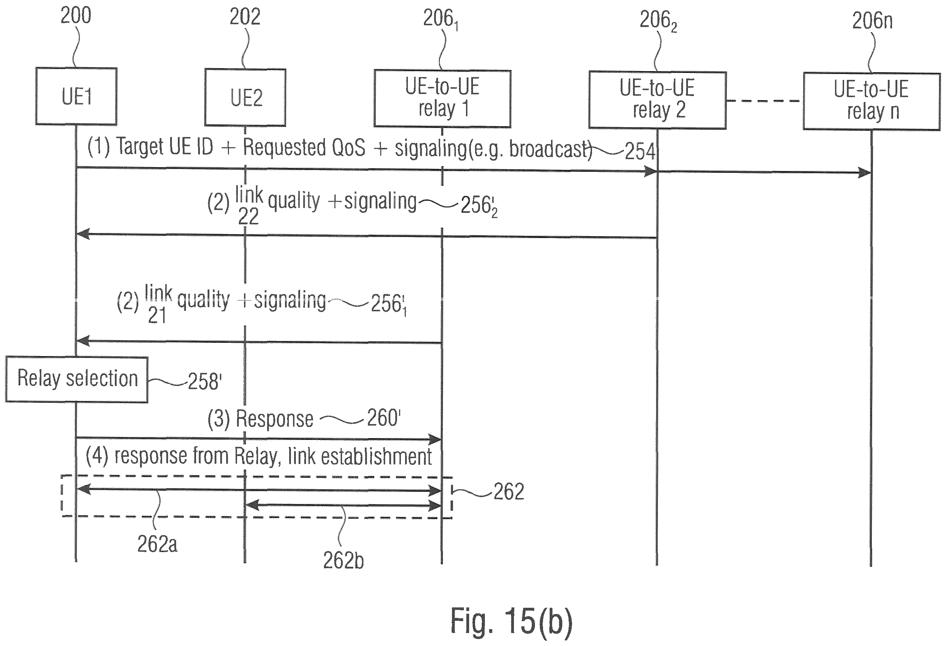

Fig. 15 illustrates embodiments for selecting UE-to-UE relays for an end-to-end communication between a remote UE 200 and another UE 202. Fig. 15(a) illustrates an embodiment in accordance with which the destination 202 performs the relay selection, and Fig. 15(b) illustrates an embodiment in accordance with which the remote UE selects the relay to be used.

In accordance with the embodiment of Fig. 15(a), the remote UE 200 transmits a request 254 including the identification of the destination UE 202, the target UE ID, to the potential UE-to-UE relays 206₁ to 206ₙ from which the relay to be used is to be selected. In accordance with embodiments, the message 254 may also include a quality of service as requested by the remote UE 200. The request 254 may also include signaling and/or reference signals and/or pilot signals that help the receiver, here a relay UE 206, measure the power and/or estimate the quality of the link between the transmitter, here UE 200, and the receiver, the same relay UE 206. It is assumed that among the plurality of relay UEs 206₁ to 206ₙ the first and second relays 206₁ and 206₂ meet the requested QoS. The first and second relays 206₁ and 206₂ return to the destination UE 202 the responses 256₁ and 256₂. The responses include the requested QoS, the link quality between the remote UE 200 and the relays, namely the link qualities L11 and L12, which are not known at the destination UE 202. In addition to the requested QoS also the signaling is indicated, which may include signaling and/or reference signals and/or pilot signals that help the receiver, here UE 202, measure the power and/or estimate the quality of the link between the transmitter, here a relay UE 206, and the receiver, here UE2. The destination UE 202, on the basis of the information received in the responses 256₁ and 256₂ decides, as is indicated at 258, which of the relays to use. In the embodiment depicted in Fig. 15(a), the remote UE 202 selects relay 206₁ to be used for the end-to-communication between the remote UE 200 and the destination or target UE 202. The destination UE 202 sends a response 260 to the selected UE relay 206₁ which, in turn, establishes a connection to the remote UE 200 and the destination UE 202, as indicated at 262 by exchanging respective messages 262a and 262b with the remote UE 200 and the destination UE 202 for establishing the respective links.

Fig. 15(b) illustrates an embodiment in accordance with which the remote or source UE 200 performs the relay selection. A similar scenario as in Fig. 15(a) is assumed, namely that among the plurality of relay UEs the first and second relays 206, to 206₂ are available for the requested QoS to be provided for the communication with the destination UE 202. The remote UE 200 sends the request 254 in a way as described above with reference to Fig. 15(a), however, other than in the previous embodiment, those UE-relays meeting the requirements for the communication link between the remote UE and the destination UE send respective responses 256₁' and 256₂'. Other than in Fig. 15(a), only the link qualities L21, L22 on the links between the UE relay and the destination UE 202 is indicated in the response. In addition, the signaling may also be included which may include a signaling and/or reference signals and/or pilot signals that help the receiver, here a relay UE 206, measure the power and/or estimate the quality of the link between the transmitter, here UE 200, and the receiver, the same relay UE 206. The remote UE 200 selects the relay UEs to be used, as indicated at 258', using the information included in the responses 256₁' and 256₂'. It is assumed that the remote UE 200 selects the first relay 206₁ and sends a corresponding response 260' responsive to which the selected relay 206₁, as is indicated at 262, establishes the connections between the remote UE 200 and the relay 206₁ and between the destination UE 200 and the UE relay 206₁ by exchanging the respective messages 262a and 262b among the just mentioned entities.

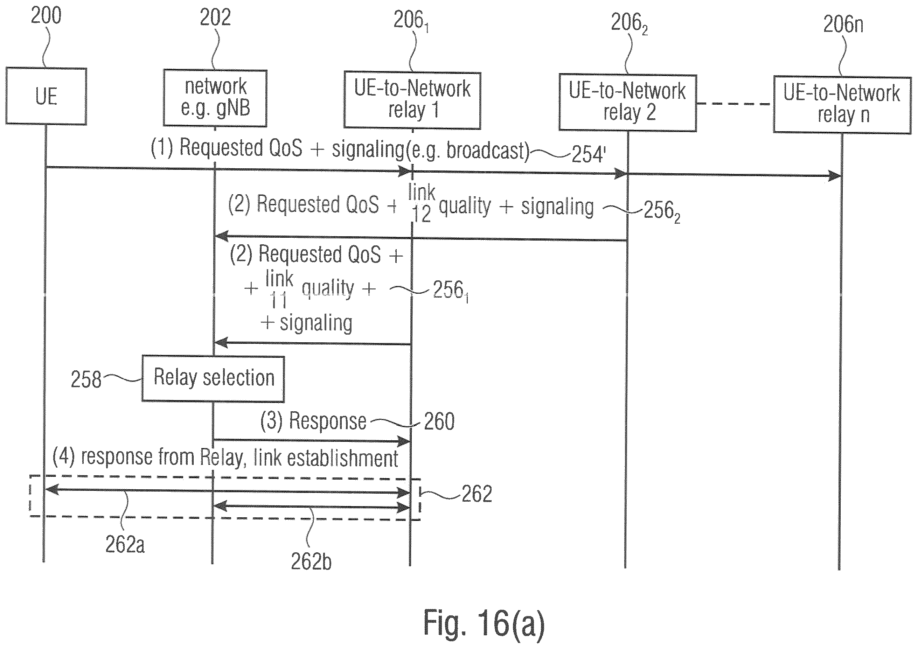

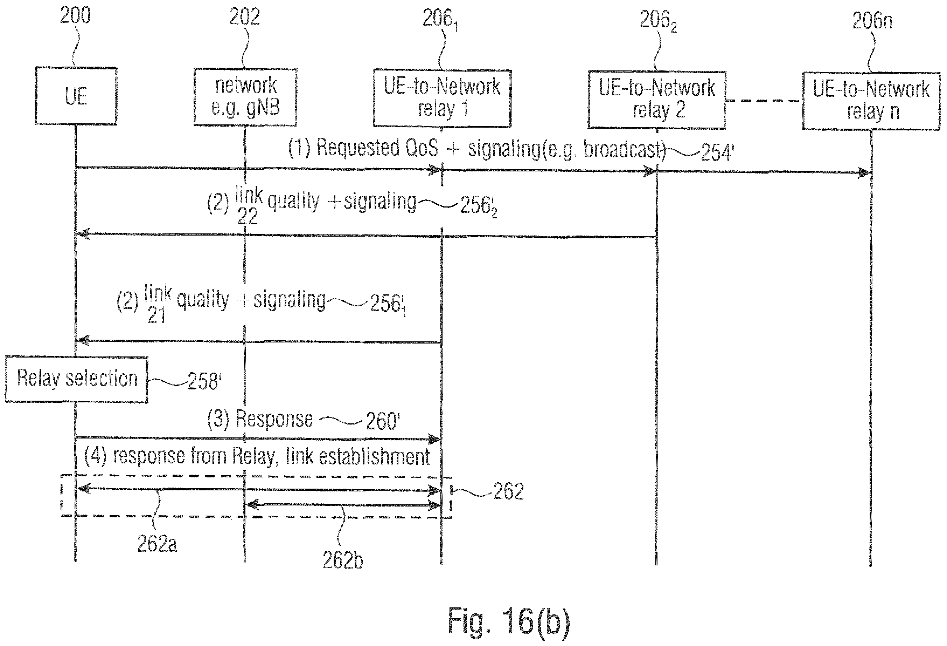

Fig. 16 illustrates embodiments for selecting a relay UE in case of an end-to-end communication between a remote UE 200 and a network 202. Fig. 16(a) illustrates an embodiment in accordance with which the network, e.g., the access network like a base station or gNB, performs the relay selection. Fig. 16(b) illustrates an embodiment in accordance with which the relay selection is performed by the remote UE.

The process described in Fig. 16 basically corresponds to the process described in Fig. 15 so that corresponding reference signs are employed for the respective signaling in Fig. 16. When compared to Fig. 14 the difference is that the remote UE, in the request 254, does not need to include a target UE ID, as the UE is already aware of the target or destination, for example, the gNB, it is to be connected to, because it is in the coverage of this gNB. Thus, in Fig. 16(a), except for the destination now being the network and except for the just mentioned modification in the request 254 all other signaling corresponds to the signaling described above with reference to Fig. 15(a). Likewise, in Fig. 16(b), except for the destination being the network and for the modified request 254, the remaining signaling corresponds to the signaling described above with reference to Fig. 15(b). Thus, other than in Fig. 15, in Fig. 16 the UE 200 sends the request 254' including, for example, the requested QoS and a signaling to the relays 206₁ to 206_{N}.

In the embodiments described above with regard to the second aspect of the present invention, situations have been described in accordance with which the end-to-end communication between the remote UE 200 and the destination 202 is via a single relay that is selected as described above. However, the present invention is not limited to such embodiments, rather, in accordance with further embodiments, the end-to-end communication between the remote UE and the destination 202 may be via a plurality of relays, also referred to as a set of relay UEs or as a chain of relay UEs.

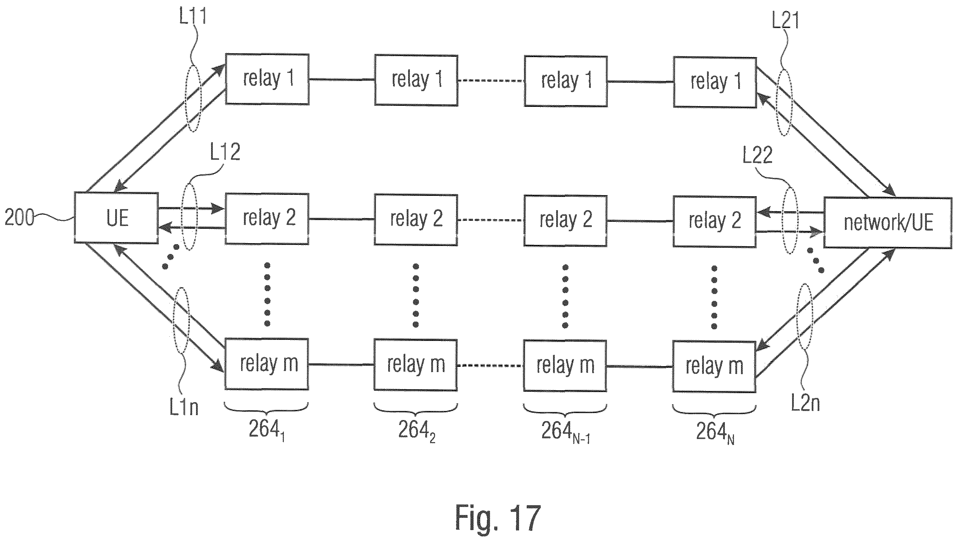

Fig. 17 illustrates an embodiment in accordance with which the communication between the remote UE 200 and the destination 202 is using two or more relays. Fig. 17 illustrates N relay layers. Each relay layer includes a plurality of relay devices 1 to m, like relay UEs. The respective relay layers 264₁ to 264_{N} may include the same number of relay UEs or some or all of the relay layers 264₁ to 264_{N} may include different numbers of relay UEs. The remote UE 200 may connect to the relays of the first relay layer 264₁ and the respective link qualities L11 to L1n are known, as described above with reference to Fig. 14. Likewise, the destination 202 may connect to the relays of the relay layer 264ₙ, and the respective link qualities L21 to L2n are known, as described above with reference to Fig. 14. The relays in the respective relay layers to be used for the end-to-end communication between the remote UE 200 and the destination 202 may be selected in a way as described above with reference to Fig. 15 and Fig. 16, however, for the relay selection also the link qualities between the relays of the relay layers 264₁ to 264_{N} is provided to the remote UE or to the destination and is used for the selection of the relays to be used.

In case the decision is made at the destination 202, the remote UE 200 sends the message 254 or 254' (see Fig. 15(b) and Fig. 16(b)) to the first relay layer and each relay UE adds its own hop or link quality to relays in the next relay layer to the message received and sends it to the next relay, until it reaches the destination 202. For example, when assuming N relay layers, relays fulfilling the remote UE's transmission requirements, like the QoS requested by the remote UE 200 in message 254, 254', for each layer n, n=1,2,..,N-1, the link qualities between layer n relays and layer n+1 relays are added to the message and returned to the destination together with the link qualities L11 to L1n.

In case the decision is made at the remote UE 202, the remote UE 200 sends the message 254 or 254' (see Fig. 15(a) and Fig. 16(a)) to the first relay layer and each relay UE adds its own hop or link quality to relays in the next relay layer to the message received and sends it to the next relay, until it reaches the destination 202. For example, when assuming N relay layers, relays fulfilling the remote UE's transmission requirements, like the QoS requested by the remote UE 200 in message 254, 254', for each layer n, n=1,2,..,N-1, the link qualities between layer n relays and layer n+1 relays are added to the message and returned to the remote UE together with the link qualities L21 to L2n. In accordance with other embodiments, the request 254, 254' of the remote UE may initially pass from remote UE to the destination, and then from destination, each relay starts to add its link quality and pass it back to the previous relay, until it reaches the remote relay.

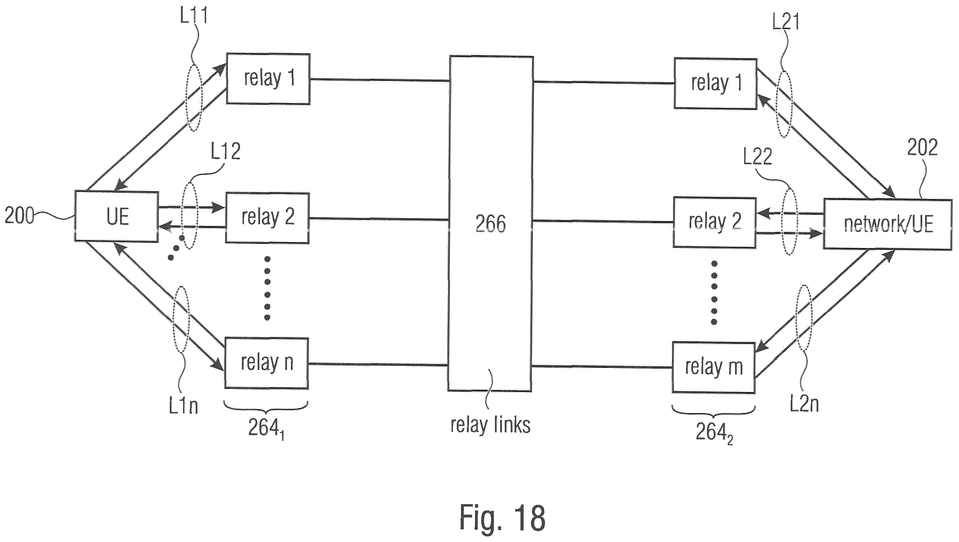

Fig. 18 illustrates an embodiment employing N=2 relay layers for the end-to-end communication between the remote UE 200 and the destination 202 which may be another UE or which may be the network. Fig. 18 illustrates the respective links L11 to L1n and L21 to L2n between the remote UE 200 and the first relay layer 264₁ to which the remote UE may connect. The first relay layer 264₁ may include n UE relays. The destination 202 may be connectable to a second relay layer 264₂, and the second relay layer 264₂ may include m UE relays. In accordance with embodiments, the respective relay layers 264₁, 264₂ may have the same number of relays, n = m. In accordance with other embodiments, the number of relays in the respective relay layers 264₁, 264₂ may be different, i.e., n #m. The respective relays in the different relay layers 264₁, 264₂ may connect with each other, as is indicated, schematically, at 266. Some or all of the relays in the first relay layer 264₁ may connect with some or all of the relays in the second relay layer 264₂, and the link quality for the respective connections between the relays in the layers is known at the relays of the first relay layer 264₁ and/or at the relays of the second relay layer 264₂. The relays to be used for the end-to-end communication between the remote UE 200 and the destination 202 may be selected in a way as described above with reference to Fig. 15 to Fig. 17.

The embodiments for selecting the one or more relays described above with reference to Fig. 14 to Fig. 18 may be employed for initially selecting the relay(s) when establishing the end-to-end communication between the remote UE 200 and the network/UE 202. In accordance with further embodiments, the approach described above with reference to Fig. 14 to Fig. 18 may be employed for reselecting the relay(s) during an established end-to-end communication between the remote UE 200 and the network/UE 202, e.g., in case a UE relay is no longer acting as a relay, like in the embodiments described above with reference to the first aspect of the present invention.

### General

Embodiments of the present invention have been described in detail above, and the respective embodiments and aspects may be implemented individually or two or more of the embodiments or aspects may be implemented in combination.

With regard to the above-described embodiments of the various aspects of the present invention, it is noted that they have been described in a certain environment in which a communication is between a transmitter, like a TX UE, and a receiver, like a gNB. However, the invention is not limited to such a communication, rather, the above-described principles may equally be applied also for a device-to-device communication over the sidelink, like a D2D, V2V or V2X communication.

In accordance with embodiments, the wireless communication system may include a terrestrial network, or a non-terrestrial network, or networks or segments of networks using as a receiver an airborne vehicle or a spaceborne vehicle, or a combination thereof.

In accordance with embodiments, the user device, UE, may be one or more of a mobile terminal, or a stationary terminal, or a cellular loT-UE, or a vehicular UE, or a vehicular group leader (GL) UE, or an IoT, or a narrowband loT, NB-loT, device, or a WiFi non Access Point STAtion, non-AP STA, e.g., 802.11ax or 802.11be, or a ground based vehicle, or an aerial vehicle, or a drone, or a moving base station, or a road side unit, or a building, or any other item or device provided with network connectivity enabling the item/device to communicate using the wireless communication network, e.g., a sensor or actuator, or any other item or device provided with network connectivity enabling the item/device to communicate using a sidelink the wireless communication network, e.g., a sensor or actuator, or any sidelink capable network entity. The base station, BS, may be implemented as mobile or immobile base station and may be one or more of a macro cell base station, or a small cell base station, or a central unit of a base station, or a distributed unit of a base station, or a road side unit, or a UE, or a group leader (GL), or a relay, or a remote radio head, or an AMF, or an SMF, or a core network entity, or mobile edge computing entity, or a network slice as in the NR or 5G core context, or a WiFi AP STA, e.g., 802.11 ax or 802.11be, or any transmission/reception point, TRP, enabling an item or a device to communicate using the wireless communication network, the item or device being provided with network connectivity to communicate using the wireless communication network.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

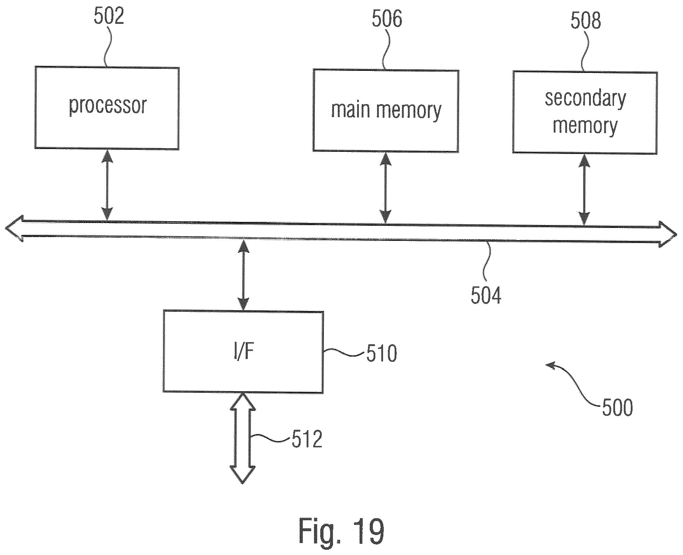

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 19 illustrates an example of a computer system 500. The units or modules as well as the steps of the methods performed by these units may execute on one or more computer systems 500.

The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

## Claims

1. A user device (206), UE, for a wireless communication system,
wherein the UE is to receive a configuration command (214) from a network entity of the wireless communication system, the configuration command to to configure the UE as a relay UE so as to provide functionality to support connectivity to a destination for one or more remote UEs of the wireless communication system,
wherein, responsive to receiving the configuration command, the UE is adapted to send a response to the network entity including either an accept message or a reject message.

2. The UE of claim 1, wherein the UE is to receive the configuration command using access stratum, AS, signaling, e.g., RRC signaling, or using non-access stratum, NAS, signaling, e.g., dedicated NAS information piggybacked over RRC signaling.

3. The UE of claim 1 or 2, wherein the UE is to reject the configuration command when there is a certain cause or reason, wherein the cause or reason may include one or more of:
- a location of the UE, e.g. the UE moving towards out-of-coverage,
- a status of the UE, e.g. a low battery status,
- a limited processing power, e.g. one or more other applications occupy the UE's processing power,
- a high occupation of radio resources, e.g., due to many relays in the vicinity of the UE,
- a UE capability, e.g., the UE uses required hardware features for a different feature,
- a pre-defined KPI measured at the given UE, e.g., SNR, SINR, RSSI, RSRP, CQI, throughput, BER, PER, which is below or above a pre-defined threshold.

4. The UE of claim 3, wherein, in case that the UE rejects the configuration command, the UE is to signal the certain cause or reason for rejecting the configuration command to the network.

5. A network entity (202) of a wireless communication system, the wireless system including one or more user devices, UEs,
wherein the network entity is to transmit a configuration command to the one or more UEs, the configuration command to configure the one or more UEs a relay UEs so as to provide functionality to support connectivity to a destination for one or more remote UEs of the wireless communication system, and
wherein network entity is to receive from the one or more UEs a message accepting or rejecting the configuration command.

6. A wireless communication system, comprising a user device, UE, of any one of claims 1 to 4, and a network entity of claim 5.

7. A method for operating a user device (206), UE, of a wireless communication system, the method comprising:
receiving, by the UE, a configuration command, the configuration command to configure the UE as a relay UE so as to provide functionality to support connectivity to a destination for one or more remote UEs of the wireless communication system, and
responsive to receiving the configuration command, sending a response to the network entity including either an accept message or a reject message.

8. A non-transitory computer program product comprising a computer readable medium storing instructions which, when executed on a computer, performs the method of claim 7.

## Patentansprüche

1. Benutzervorrichtung (206), UE, für ein drahtloses Kommunikationssystem,
wobei das UE einen Konfigurationsbefehl (214) von einer Netzwerkeinheit des drahtlosen Kommunikationssystems empfangen soll, wobei der Konfigurationsbefehl das UE als ein Relais-UE konfigurieren soll, um Funktionalität zur Unterstützung von Konnektivität mit einem Ziel für eine oder mehrere entfernte UEs des drahtlosen Kommunikationssystems bereitzustellen,
wobei das UE als Reaktion auf Empfangen des Konfigurationsbefehls dazu ausgelegt ist, eine Antwort an die Netzwerkeinheit zu senden, die entweder eine Annahmenachricht oder eine Ablehnungsnachricht beinhaltet.

2. UE nach Anspruch 1, wobei das UE den Konfigurationsbefehl unter Verwendung von Access-Stratum-, AS-, Signalisierung, z. B. RRC-Signalisierung, oder unter Verwendung von Non-Access-Stratum-, NAS-, Signalisierung, z. B. dedizierte NAS-Informationen, die über RRC-Signalisierung mittransportiert werden, empfangen soll.

3. UE nach Anspruch 1 oder 2, wobei das UE den Konfigurationsbefehl ablehnen soll, wenn eine bestimmte Ursache oder ein bestimmter Grund vorliegt, wobei die Ursache oder der Grund eines oder mehrere des Folgenden beinhalten kann:
- einen Standort des UE, z. B. das UE bewegt in Richtung aus dem Abdeckungsbereich heraus,
- einen Status des UE, z. B. ein niedriger Batteriestatus,
- eine begrenzte Verarbeitungsleistung, z. B. eine oder mehrere andere Anwendungen belegen die Verarbeitungsleistung des UE,
- eine hohe Belegung von Funkressourcen, z. B. aufgrund vieler Relais in der Nähe des UE,
- eine UE-Fähigkeit, z. B. das UE verwendet erforderliche Hardwarefunktionen für eine andere Funktion,
- ein vordefinierter, an dem vorgegebenen UE gemessener KPI, z. B. SNR, SINR, RSSI, RSRP, CQI, Durchsatz, BER, PER, der unter oder über einem vordefinierten Schwellenwert liegt.

4. UE nach Anspruch 3, wobei das UE im Fall, dass das UE den Konfigurationsbefehl ablehnt, dem Netzwerk die bestimmte Ursache oder den bestimmten Grund für die Ablehnung des Konfigurationsbefehls signalisieren soll.

5. Netzwerkeinheit (202) für ein drahtloses Kommunikationssystem, wobei das drahtlose Kommunikationssystem eine oder mehrere weitere Benutzervorrichtungen (UEs) beinhaltet,
wobei die Netzwerkeinheit einen Konfigurationsbefehl an die eine oder mehreren UEs übertragen soll, wobei der Konfigurationsbefehl die UEs konfigurieren soll, UEs zu übermitteln, um eine Funktionalität zur Unterstützung von Konnektivität zu einem Ziel für eine oder mehrere entfernte UEs des drahtlosen Kommunikationssystems bereitzustellen, und
wobei die Netzwerkeinheit von der einen oder den mehreren UEs eine Nachricht empfangen soll, die den Konfigurationsbefehl akzeptiert oder ablehnt.

6. Drahtloses Kommunikationssystem, das eine Benutzervorrichtung, UE, nach einem der Ansprüche 1 bis 4 und eine Netzwerkeinheit nach Anspruch 5 umfasst.

7. Verfahren zum Betreiben einer Benutzervorrichtung (206), UE, eines Drahtloskommunikationssystems, wobei das Verfahren Folgendes umfasst:
Empfangen eines Konfigurationsbefehls durch das UE, wobei der Konfigurationsbefehl das UE als ein Relais-UE konfigurieren soll, um Funktionalität zur Unterstützung von Konnektivität zu einem Ziel für ein oder mehrere entfernte UEs des drahtlosen Kommunikationssystems bereitzustellen, und
in Reaktion auf Empfangen des Konfigurationsbefehls, Senden einer Antwort an die Netzwerkeinheit, die entweder eine Annahmenachricht oder eine Ablehnungsnachricht beinhaltet.

8. Nicht-transitorisches Computerprogrammprodukt, das ein computerlesbares Medium umfasst, das Anweisungen speichert, das, wenn es auf einem Computer ausgeführt wird, das Verfahren nach Anspruch 7 durchführt.

## Revendications

1. Dispositif utilisateur (206), UE, pour un système de communication sans fil,
dans lequel l'UE doit recevoir une commande de configuration (214) d'une entité réseau du système de communication sans fil, la commande de configuration permettant de configurer l'UE en tant qu'UE relais afin de fournir une fonctionnalité pour prendre en charge la connectivité à une destination pour un ou plusieurs UE distants du système de communication sans fil,
dans lequel, en réponse à la réception de la commande de configuration, l'UE est adapté pour envoyer une réponse à l'entité réseau incluant soit un message d'acceptation, soit un message de rejet.

2. UE selon la revendication 1, dans lequel l'UE doit recevoir la commande de configuration en utilisant une signalisation de strate d'accès, AS, par exemple une signalisation RRC, ou en utilisant une signalisation de strate non d'accès, NAS, par exemple des informations NAS dédiées superposées sur une signalisation RRC.

3. UE selon la revendication 1 ou 2, dans lequel l'UE doit rejeter la commande de configuration lorsqu'il existe une certaine cause ou raison, dans lequel la cause ou la raison peut inclure une ou plusieurs parmi :
- un emplacement de l'UE, par exemple l'UE se déplace vers une zone hors couverture,
- un état de l'UE, par exemple un état de batterie faible,
- une puissance de traitement limitée, par exemple une ou plusieurs autres applications occupent la puissance de traitement de l'UE,
- une forte occupation des ressources radio, par exemple en raison de nombreux relais à proximité de l'UE,
- une capacité UE, par exemple l'UE utilise les fonctionnalités matérielles requises pour une fonctionnalité différente,
- un KPI prédéfini mesuré au niveau de l'UE donné, par exemple, SNR, SINR, RSSI, RSRP, CQI, débit, BER, PER, qui est inférieur ou supérieur à un seuil prédéfini.

4. UE selon la revendication 3, dans lequel, dans le cas où l'UE rejette la commande de configuration, l'UE doit signaler la cause ou la raison certaine du rejet de la commande de configuration au réseau.

5. Entité réseau (202) d'un système de communication sans fil, le système sans fil incluant un ou plusieurs dispositifs utilisateurs, UE,
dans laquelle l'entité réseau doit transmettre une commande de configuration aux un ou plusieurs UE, la commande de configuration permettant de configurer les un ou plusieurs UE en tant qu'UE relais afin de fournir une fonctionnalité pour prendre en charge la connectivité à une destination pour un ou plusieurs UE distants du système de communication sans fil, et
dans laquelle l'entité réseau doit recevoir des un ou plusieurs UE un message acceptant ou rejetant la commande de configuration.

6. Système de communication sans fil, comprenant un dispositif utilisateur, UE, selon l'une quelconque des revendications 1 à 4, et une entité réseau selon la revendication 5.

7. Procédé de fonctionnement d'un dispositif utilisateur (206), UE, d'un système de communication sans fil, le procédé comprenant :
la réception, par l'UE, d'une commande de configuration, la commande de configuration permettant de configurer l'UE en tant qu'UE relais afin de fournir une fonctionnalité pour prendre en charge la connectivité à une destination pour un ou plusieurs UE distants du système de communication sans fil, et
en réponse à la réception de la commande de configuration, l'envoi d'une réponse à l'entité réseau incluant soit un message d'acceptation, soit un message de rejet.

8. Produit de programme informatique non transitoire comprenant un support lisible par ordinateur stockant des instructions qui, lorsqu'elles sont exécutées sur un ordinateur, mettent en œuvre le procédé selon la revendication 7.
